# EUROPEAN PATENT APPLICATION

(11) **EP 2 320 521 A1**
(43) Date of publication of application: **11.05.2011**
(21) Application number: 09175581.9
(22) Date of filing: 10.11.2009
(51) Int. Cl.: H01Q 15/14, H01Q 17/00, G01S 13/75

(54) **Method for controllable reflecting radar signals via reflection members**

(71) Applicant: Nederlandse Organisatie voor Toegepast -Natuurwetenschappelijk Onderzoek TNO, 2628 VK Delft (NL)
(72) Inventor: Elferink, Franciscus Hedrikus, 2211 MR Noordwijkerhout (NL)

(57) **Abstract**

System for controllable reflecting radar signals via reflection members (1), wherein the reflection members have reflective characteristics for the radar signals which are different when irradiated by light or when not respectively. The system includes radar means (3), providing that the reflection members are irradiated by a radar signal, and including light emission means (4, 5), providing that the reflection members are irradiated by a light source (4) during the time they are irradiated by the radar signal. The radar means are arranged for receiving and processing any radar reflection signals, i.e. the portions of the radar signal reflected by the reflection members and/or by any further reflective objects, during the time that the reflection members are irradiated by the light source, as well as any radar reflection signal during the time that the reflection members are not irradiated by the light source. The system may comprise coding means (2) which include reflection members (1) having similar reflective characteristics for the radar signals when irradiated by a light source or when not respectively, the reflection members, however, having those similar reflective characteristics for the radar signals when irradiated by a light source or when not respectively, for mutually different wavelengths (ω_{1...11}) s of the light.

## Description

The present invention refers to a method for controllable reflecting radar signals via one or more reflection members, which may be used for several applications, including identification tags, gaming and military applications.

According to the invention a method for controllable reflecting radar signals via one or more reflection members is provided, preferably comprising steps of:
- providing that the one or more reflection members have reflective characteristics for the radar signals which are different when irradiated by a light source or when not respectively;
- providing that the one or more reflection members are irradiated by at least one radar signal;
- providing that at least part of the one or more reflection members are irradiated by a light source during at least part of the time they are irradiated by the at least one radar signal;
- receiving and processing any radar reflection signal or signals, i.e. the portion or portions of the at least one radar signal reflected by the one or more reflection members and/or by any further reflective objects, during the time that the at least part of the one or more reflection members are irradiated by the light source, and any radar reflection signal or signals during the time that the at least part of the one or more reflection members are not irradiated by the light source.

In applications where reflection members are used having different distances to the radar transmitter, those distances can be measured by the (e.g. FMCW) radar. Recognition of the reflection members amidst other reflective objects thus can be enhanced by applying the method according to the invention, i.e. by irradiating the reflection members by light, making a radar image, turning the light off and making a radar image again and determining the difference between both radar images. Only reflection spots which solely appear in de radar image when the light was turned on represent the reflection members, as those reflection members solely reflect radar signals when they are irradiated by light.

Radar is not very suitable to discriminate between reflection members which are located at about equal distances to the radar source and/or in each other's vicinity. When such reflection members e.g. are used for remote coding purposes, it may be preferred that the reflection members, used as (binary) coding elements, have reflective characteristics for radar signals which are different when irradiated by a light source having a predetermined wavelength or wavelength range or when not respectively. Using such discrimination in light wavelength (colour) sensibility of the reflection members, coding means may be formed having two or more reflection members having similar reflective characteristics for radar signals when irradiated by a light source (reflective for radar) or when not (not reflective for radar) respectively, the reflection members, however, having those similar reflective characteristics for radar signals when irradiated light or when not respectively, for mutually different wavelengths or wavelength ranges of the light. An exemplary embodiment for a system using light wavelength discrimination for reflective coding members will be discussed hereinafter as an application example of the method according to the invention.

Application of the method according to the invention, however, is not restricted to object coding of identification, but may be applicable to a greater extend. One example is to provide light controllable reflectors which may be used in e.g. military applications, to simulate displacement of military objects or for jamming hostile radar information etc.

Hereinafter the invention will be discussed more in detail with reference to some figures, wherein
- Figure 1: shows an exemplary embodiment of a system for controllable reflecting radar signals via one or more reflection members, applied for object identification;
- Figure 2: shows an embodiment of a coding module including light dependent reflection members, in uncoded (left) and coded (right) state;
- Figure 3: illustrates, as functions of the time, two optional radar signals, a preferred ON/OFF light signal, processed radar signals reflected by any objects including the reflection members, and processed radar signal solely reflected by the reflection members.

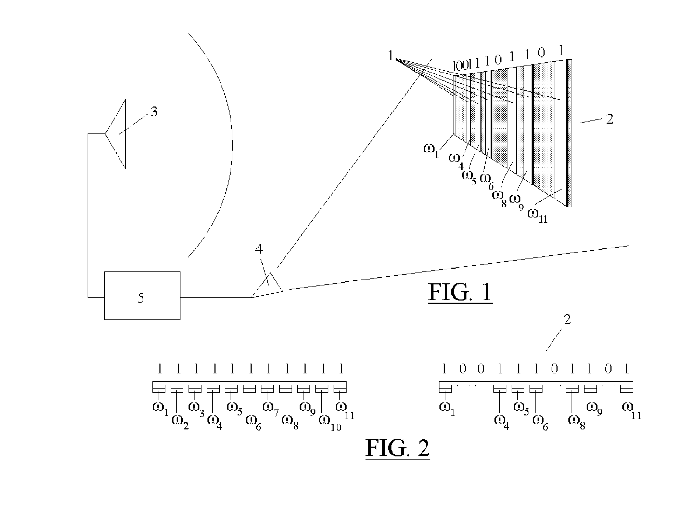

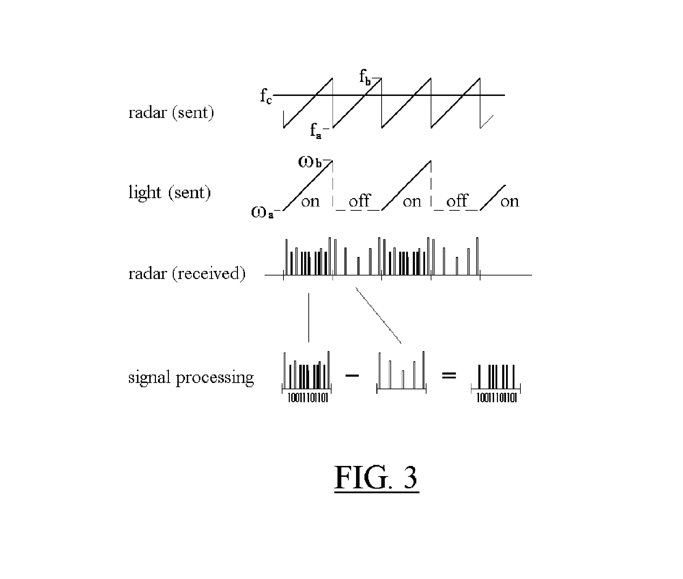

Figure 1 shows a system for controllable reflecting radar signals via a number of reflection members 1 included by an object coding module 2. Each of those reflection members 1 have reflective characteristics for radar signals which are different when irradiated by a light source 4 or when not respectively. All individual reflection members 1, however, have that characteristic for different (light) wavelengths, indicated as ω₁ - ω₁₁ respectively. A light source 4 is able to radiate light between wavelengths ωₐ and ω_{b}, in a way as shown in figure 3.

The system in figure 1 further shows an FMCW radar transceiver 3 which is able to irradiate the reflection members 1 with a radar signal which periodically sweeps from frequencies fₐ to f_{b}. Due to this frequency sweep the distance between the radar transceiver 3 and the reflection members 1 can be measured in a way which is generally known from the FMCW radar technique. When, however, it is not necessary to measure the distance between the radar transceiver 3 and the reflection members 1, a radar transceiver 3 may be used which simply transmits a signal having a continuous frequency f_{c}, in stead of a "frequency sweeping" radar signal.

The light source 4 and the radar transceiver 3 are under control of a control unit 5. Under control of the control unit 5 the reflection members 1 of the code module 2 are irradiated by the light source 4 during always part of the time they are irradiated by the radar signal. As illustrated in figure 3, the light is, alternately, switched on and swept from ωₐ ω_{b} within one period P, and switched off then (dotted lines) during next period, switched on and swept from ωₐ ω_{b} again, and switched off, etc. When an FMCW radar signal is used, it may be preferred that the period P of that FMCW signal is equal to the light on/off period P. However, if stated before, FMCW radar (including periodical frequency sweep) is not strictly necessary for remote reading the code value of the code module; however, it may be used for determining the distance from the radar transceiver 3 to the coding module 2.

Figure 2 illustrates the configuration of the coding module 2. The left side of figure 2 shows a basic code module, which has not been coded yet. It is constituted by a carrier 6, a number of separated layers in any shape, e.g. having the form of stripes 7, made of a material which is reflective for radar signals when irradiated by light. Without being irradiated by light, they are not reflective for radar beams. To make those stripes 7 selective for certain light wavelengths of wavelength areas, the stripes 7 are provided with colour filters 8, i.e. filters which are selective for one wavelength of wavelength area. In that way the coding module includes a number of stripes, each being sensitive for one wavelength (area) ω₁ ... ω₁₁. The stripes 7 and the filters 8 may be manufactured by evaporation or printing upon the carrier 6.

After manufacturing, the coding module 2 can be coded, e.g. for an object to be identified remotely, by e.g. etching away some stripes 7 and filters 8. The right side of figure 2 shows a module 2 coded with binary code 10011101101, viz. by etching away or covering (e.g. by printing) the stripes (i.e. either their relevant stripe layer 7 or filter layer 8 or both) the sensible for the light wavelengths ω₂, ω₃, ω₇ and ω₁₀ respectively.

When each of the remaining stripes 7/8 is irradiated by light having the (pass) wavelength for which its filter layer 8 is sensitive, the stripe 7/8 will be reflective for a radar signal which irradiates that stripe at the same moment (the radar frequency is not relevant as such). So, when the coding module 2 is by the light source 4 with a light sweeping from ωₐ and ω_{b} and, at the same time, by the radar transceiver 3, each of the stripes 7/8 not etched away will reflect the radar signal, while each stripe 7/8 which was etched away will not. The result is that, while the light sweeps from ωₐ to ω_{b}, subsequently, the stripes 7/8 -indicated by their filter wavelengths before they were etched away-ω₁ will reflect the radar signal, ω₂ and ω₃ will not, ω₄, ω₅ and ω₆ will reflect, ω₇ will not, ω₈ and ω₉ will, ω₁₀ will not reflect and ω₁₁ will reflect the radar signal. The result is that subsequently a radar signal is reflected having in the form of 10011101101, in which 1 represents "reflecting" and 0 represents "not reflecting". Assigning 1 to "reflecting" and 0 "not reflecting" is arbitrary: as an alternative it could be chosen that 0 would represent "reflecting" and 1 "not reflecting", which would result in a code 1100010010.

The radar transceiver 3 (including processing means which are not shown explicitly) is arranged for receiving and processing any radar reflection signals, i.e. portions of the radar signal which are reflected by the reflection members 1, and/or by any further reflective objects (not shown explicitly) to wit during the time that the reflection members 1 of the coding module 2 are irradiated by the light source 4, and during the time that the reflection members 1 are not irradiated by the light source 4. Figure 3 illustrates, as functions of the time, two optional radar signals, a preferred ON/OFF light signal, processed radar signals reflected by any objects including the reflection members, and processed radar signal solely reflected by the reflection members.

The transmitted radar signal may be an FMCW signal, having a saw tooth like frequency/time shape and including periodic frequency sweeps fro m fₐ to f_{b}. For this invention it is not necessary to use FMCW radar signals; only if the distance between the radar transceiver and the coding module should be measured, FMCW could be used. However, the radar signal could comprise a continuous signal having any frequency f_{c}.

Figure 3 further illustrates that a light source is switched on and off, one or more times. When switched on, the light wavelength sweeps from ωₐ to ω_{b}, after which the light source is switched off (indicated by the dotted lines).

During the period(s) the light is ON the radar signal are reflected by several objects having reflective properties for radar frequent signals, including the reflection members as long as they are irradiated by the light source (each reflection member only when the light has that reflection member's specific (filter) wavelength ω_{1...11}). Those reflections are seen in figure 3 in the first and third period: the reflections of the reflections members 1 are indicated, for intelligibility, in full black, any further reflections caused by objects different from reflection members 1, in white. During the period(s) the light is OFF, i.e. during the second and fourth periods in figure 3, the reflection members do not reflect the radar signal. Only further the reflections, caused by objects different from reflection members 1, will be received by the radar transceiver. When the reflection signals, received by the radar transceiver, are processed -e.g. within the control module 5- as illustrated in the at the bottom of figure 3, i.e. by subtracting the ("white") reflections picked up by the radar transceiver 3 during a period (e.g. the second or fourth period) the light source 4 is OFF (thus disabling the reflectivity of the reflective members 1 of code module 2) from the ("white and black") reflections, picked up by the radar transceiver 3 during a period (e.g. the first or third period) the (sweeping) light source 4 is ON (thus enabling the reflectivity of the reflective members 1), resulting in solely the "black" reflections, i.e. solely the reflections caused by the reflection members 1.

## Claims

1. Method for controllable reflecting radar signals via one or more reflection members (1), comprising steps of:
- providing that said one or more reflection members have reflective characteristics for said radar signals which are different when irradiated by a light source (4) or when not respectively;
- providing that said one or more reflection members are irradiated by at least one radar signal (3);
- providing that at least part of said one or more reflection members are irradiated by a light source during at least part of the time they are irradiated by said at least one radar signal;
- receiving and processing any radar reflection signal or signals, i.e. the portion or portions of the at least one radar signal reflected by said one or more reflection members and/or by any further reflective objects, during the time that said at least part of said one or more reflection members are irradiated by said light source, and any radar reflection signal or signals during the time that said at least part of said one or more reflection members are not irradiated by said light source.

2. Method according to claim 1, one or more reflection members having reflective characteristics for said radar signals which are different when irradiated by a light source having a predetermined wavelength or wavelength range or when not respectively.

3. Method according to claim 1 or 2, wherein coding means (2) are provided including two or more reflection members having similar reflective characteristics for said radar signals when irradiated by a light source or when not respectively, the reflection members, however, having those similar reflective characteristics for said radar signals when irradiated by a light source or when not respectively, for mutually different wavelengths (ω_{1...11}) or wavelength ranges of the light.

4. System for controllable reflecting radar signals via one or more reflection members (1), wherein said one or more reflection members have reflective characteristics for said radar signals which are different when irradiated by light or when not respectively, the system, moreover, including radar means (3), providing that said one or more reflection members are irradiated by at least one radar signal, and including light emission means (4, 5), providing that at least part of said one or more reflection members are irradiated by a light source (4) during at least part of the time they are irradiated by said at least one radar signal; at least part of said radar means being arranged for receiving and processing any radar reflection signal or signals, i.e. the portion or portions of the at least one radar signal reflected by said one or more reflection members and/or by any further reflective objects, during the time that said at least part of said one or more reflection members are irradiated by said light source, and any radar reflection signal or signals during the time that said at least part of said one or more reflection members are not irradiated by said light source.

5. System according to claim 4, one or more reflection members being arranged to have reflective characteristics for said radar signals which are different when irradiated by a light source having a predetermined wavelength or wavelength range or when not respectively.

6. System according to claim 4 or 5, comprising coding means (2) which include two or more reflection members (1) having similar reflective characteristics for said radar signals when irradiated by a light source or when not respectively, the reflection members, however, having those similar reflective characteristics for said radar signals when irradiated by a light source or when not respectively, for mutually different wavelengths (ω_{1...11}) or wavelength ranges of the light.
